# EUROPEAN PATENT APPLICATION

(11) **EP 4 507 415 A1**
(43) Date of publication of application: **12.02.2025**
(21) Application number: 24192453.9
(22) Date of filing: 01.08.2024
(51) Int. Cl.: H04W 64/00, G01S 5/02, H04W 88/02

(54) **APPARATUSES FOR ANCHOR SELECTION IN SIDELINK POSITIONING**

(30) Priority: 02.08.2023 US 202363517313 P
(71) Applicant: Nokia Technologies Oy, 02610 Espoo (FI)
(72) Inventor: KAKKAVAS, Anastasios, 80331 Munich (DE); KUCERA, Stepan, 81541 Munich (DE); MICHALOPOULOS, Diomidis, 81541 Munich (DE); SAHIN, Taylan, 81739 Munich (DE); KESHAVAMURTHY, Prajwal, 81241 Munich (DE)
(74) Representative: Script Intellectual Property LLP

(57) **Abstract**

Example embodiments of the present disclosure are directed to anchor selection in sidelink positioning. A method comprises: monitoring, at a first apparatus, proximity of the first apparatus with respect to at least one apparatus during a sidelink positioning session; and in accordance with a determination that proximity of the first apparatus with respect to a second apparatus satisfies an event detection condition, transmitting an event detection indication to at least one third apparatus which performs an action related to anchor devices for use in the sidelink positioning session.

## Description

### FIELDS

Various example embodiments of the present disclosure generally relate to the field of telecommunication and in particular, to methods, devices, apparatuses and computer readable storage medium for anchor selection in sidelink (SL) positioning.

### BACKGROUND

Positioning technologies may be used to estimate a physical location of a device. Sidelink (SL) communication refers to direct communication between terminal devices or user equipment (UE) without communicating via network node or base station. SL communications are often used for vehicular communication, critical public safety and law enforcement by police, army, first responders, etc. SL positioning is based on exchange of SL positioning reference signals (SL PRSs) between the anchor devices and a target device to enable localization of the target device.

### SUMMARY

In a first aspect of the present disclosure, there is provided a first apparatus. The first apparatus comprises at least one processor; and at least one memory storing instructions that, when executed by the at least one processor, cause the first apparatus at least to perform: monitoring proximity of the first apparatus with respect to at least one apparatus during a sidelink positioning session; and in accordance with a determination that proximity of the first apparatus with respect to a second apparatus satisfies an event detection condition, transmitting an event detection indication to at least one third apparatus which performs an action related to anchor devices for use in the sidelink positioning session.

In a second aspect of the present disclosure, there is provided a third apparatus. The apparatus comprises at least one processor; and at least one memory storing instructions that, when executed by the at least one processor, cause the third apparatus at least to perform: receiving an event detection indication from a first apparatus in a sidelink positioning session, the event detection indication being received in response to proximity of the first apparatus with respect to a second apparatus satisfying an event detection condition; and performing, based on the event detection indication, an action related to anchor devices for use in the sidelink positioning session.

In a third aspect of the present disclosure, there is provided a method. The method comprises: monitoring, at a first apparatus, proximity of the first apparatus with respect to at least one apparatus during a sidelink positioning session; and in accordance with a determination that proximity of the first apparatus with respect to a second apparatus satisfies an event detection condition, transmitting an event detection indication to at least one third apparatus which performs an action related to anchor devices for use in the sidelink positioning session.

In a fourth aspect of the present disclosure, there is provided a method. The method comprises: receiving, at a third apparatus, an event detection indication from a first apparatus in a sidelink positioning session, the event detection indication being received in response to proximity of the first apparatus with respect to a second apparatus satisfying an event detection condition; and performing, based on the event detection indication, an action related to anchor devices for use in the sidelink positioning session.

In a fifth aspect of the present disclosure, there is provided a first apparatus. The first apparatus comprises means for monitoring proximity of the first apparatus with respect to at least one apparatus during a sidelink positioning session; and means for, in accordance with a determination that proximity of the first apparatus with respect to a second apparatus satisfies an event detection condition, transmitting an event detection indication to at least one third apparatus which performs an action related to anchor devices for use in the sidelink positioning session.

In a sixth aspect of the present disclosure, there is provided a third apparatus. The third apparatus comprises means for receiving an event detection indication from a first apparatus in a sidelink positioning session, the event detection indication being received in response to proximity of the first apparatus with respect to a second apparatus satisfying an event detection condition; and means for performing, based on the event detection indication, an action related to anchor devices for use in the sidelink positioning session.

In a seventh aspect of the present disclosure, there is provided a computer readable medium. The computer readable medium comprises instructions stored thereon for causing an apparatus to perform at least the method according to the third aspect.

In an eighth aspect of the present disclosure, there is provided a computer readable medium. The computer readable medium comprises instructions stored thereon for causing an apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2A and FIG. 2B illustrate examples of sidelink positioning use cases in which example embodiments of the present disclosure can be implemented;
FIG. 3 illustrates a flowchart of a signaling flow for sidelink positioning in accordance with some example embodiments of the present disclosure;
FIG. 4 illustrates a flowchart of a signaling flow for sidelink positioning in accordance with some further example embodiments of the present disclosure;
FIG. 5 illustrates a flowchart of a method implemented at a first apparatus in accordance with some example embodiments of the present disclosure;
FIG. 6 illustrates a flowchart of a method implemented at a third apparatus in accordance with some example embodiments of the present disclosure;
FIG. 7 illustrates a simplified block diagram of a device that is suitable for implementing example embodiments of the present disclosure; and
FIG. 8 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

Some definitions of related terminologies are provided below.

Target UE or target device: UE to be positioned (in this context, using SL, i.e., PC5 interface).

Anchor UE or anchor device: UE supporting positioning of target UE, e.g., by transmitting and/or receiving reference signals for positioning, providing positioning-related information, etc., over the SL interface.

Server UE or SL Positioning Server UE: A UE or other device offering method determination, assistant data distribution and/or location calculation functionalities for Sidelink Positioning and Ranging based service.

Sidelink positioning: Positioning UE using reference signals transmitted over SL, i.e., PC5 interface, to obtain absolute position, relative position, or ranging information.

Ranging: Determination of the distance and/or the direction between a UE and another entity, e.g., anchor UE.

Sidelink positioning reference signal (SL PRS): Reference signal transmitted over SL for positioning purposes.

SL PRS (pre-)configuration: (Pre-)configured parameters of SL PRS such as time-frequency resources (other parameters are not precluded) including its bandwidth and periodicity.

A sidelink is a communication mode that allows communications between two or more terminal devices without the communications going through the network device. In sidelink, a communication device which performs a transmission to another communication device may be referred to as a transmitting device, a sidelink transmitting device, a sidelink transmitter, a TX device, or the like, and the other communication device which receives the transmission may be referred to as a receiving device, a sidelink receiving device, a sidelink receiver, a RX device, or the like. Sidelink communications may be carried out on a wireless interface, e.g., PC5 interface, sidelink communications may be unicast, groupcast, or broadcast, and may be used for device-to-device (D2D) communications, vehicle-to-everything (V2X) communications, emergency rescue applications, etc.

A sidelink positioning procedure may generally involve a target device to be positioned and further involve at least one anchor device according to different PRS-based positioning techniques. An anchor device may comprise any communication device that supports positioning of the target device. One or more SL PRSs may be communicated between the target device and the anchor device(s) along with the assistance information for absolute positioning or relative positioning, respectively. In some example embodiments, the target device may act as a transmitter (TX) device to transmit a SL PRS to the anchor device(s). In some example embodiments, one or more anchor device(s) may act as a TX device(s) to transmit a SL PRS to the target device and/or other anchor device(s).

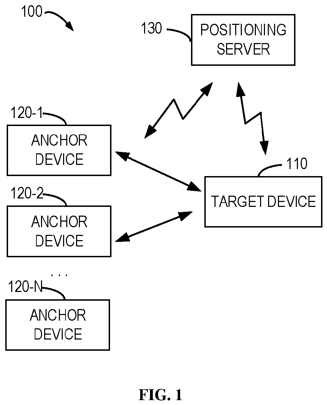

FIG. 1 illustrates an example communication environment 100 in which example embodiments of the present disclosure can be implemented. In the communication environment 100, a target device 110 is performing a SL positioning session by exchanging SL PRSs with anchor devices 120-1, 120-2 in order to determine its location. The anchor devices 120-1, 120-2 provide SL positioning assistance to the target device 110 by transmitting SL PRSs to the target device 110. Precise latency and accuracy requirements may be defined for the SL positioning session. In some example embodiments, there may be one or more other anchor devices such as an anchor device 120-N which are not currently involved in the SL positioning session but may be considered as a candidate for the SL positioning session. For the purpose of discussion, the anchor devices 120-1, 120-2, ..., 120-N may be collectively or individually referred to as anchor devices 120. In some example embodiments, the target device 110 and the anchor devices 120 may be terminal devices.

In some example embodiments, a positioning server 130 is configured to manage the positioning service. The positioning server 130 may offer method determination, assistant data distribution and/or location calculation functionalities for sidelink positioning and ranging based service. The positioning server 130 may be a terminal device (e.g., the server UE, S-UE), a network device (e.g., the Location Management Function (LMF)), or other external device. The positioning server 130 may communicate with the target device 110 and one or more anchor devices 120. Although being illustrated as a separate entity, the positioning server 130 may be the target device itself.

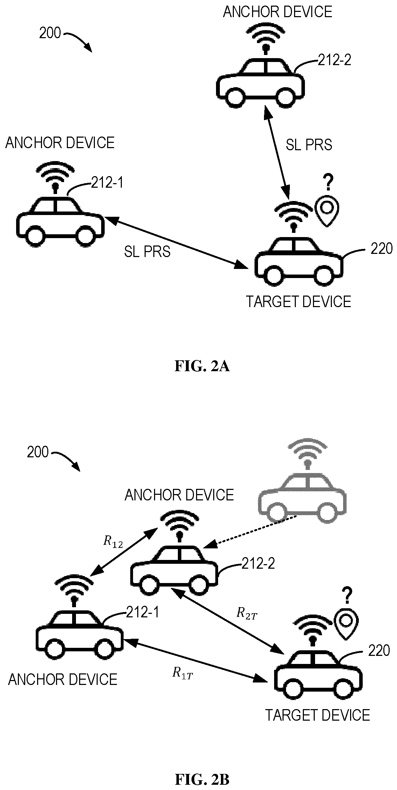

FIG. 2A illustrates an example of SL positioning use cases in a vehicular communication environment in which example embodiments of the present disclosure can be implemented. In the vehicular communication environment 200 of FIG. 2A, a target device 220 in a vehicle is to be positioned in a SL positioning session by exchanging SL PRSs with anchor devices 212-1, 212-2 in other vehicles in order to determine its location.

Communications in the communication environments of FIG. 1 and FIG. 2A may be implemented according to any proper communication protocol(s), comprising, but not limited to, cellular communication protocols of the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Anchor selection is important in SL positioning. To ensure accurate localization, anchor devices may be in locations suitable for multi-lateration of the target device. For example, if an anchor device is located collinear to another anchor device with respect to the target device, the target device may experience high geometric dilution of precision (GDOP) and the location precision may be diluted. Ideally, all anchor devices are located around the target device with equal angular separation amongst them.

However, in practice, the relative locations of selected / considered anchor devices with respect to the target device may be rather unfavorable for efficient localization of the target device. For example, two anchor devices are very close to each other or collinear. The resulting positioning error is then high as the position information obtained by measuring signals associated with one anchor device may be (almost) redundant, given the position information obtained from measuring signals associated with the second anchor device.

In some cases, if the anchor device is mobile, the relative positioning of the anchor devices and the target device may change over time. For example, in FIG. 2A, the anchor devices 212-1, 212-2 participate (potentially together with other anchor devices) in a sidelink positioning session for positioning the target device 220. Initially, the anchor devices 212-1, 212-2 are sufficiently separated and the resulting GDOP of the anchors participation in the session is good. The anchor device 212-2 moves and gets very close to the anchor device 212-1, as shown in FIG. 2B. As a result, the two anchor devices may not be in suitable locations to obtain a satisfactory GDOP for positioning the target device 220.

Selecting anchor devices subject to satisfactory GDOP with respect to the target device and pre-existing anchor devices is thus a difficult open problem.

In some solutions, an anchor UE (A-UE) participating in a SL positioning session can select another UE to replace it is an anchor UE, in case it wants to down-prioritize the positioning service or leave the positioning session entirely. The selection of the replacing UE can be based on its proximity to the A-UE. In some solutions, an A-UE sends an early interruption notification to the target UE on its inability to (continue to) support SL positioning. The A-UE may also provide substitute anchor assistance information to the target UE, which assists the target UE in determining the substitute anchor, should the SL positioning session with the A-UE be interrupted.

Note that the entity managing the positioning service of the target device, which could be the target device itself, another device (e.g. Server UE, S-UE) or the LMF, hereafter referred to as positioning server, may not be aware of the absolute location of the anchor devices (e.g., during anchor discovery and selection), or the information available at the positioning server about the absolute location of the anchor devices may be outdated. Current solutions do not address this in a proactive manner and the unfavorable geometry may be identified after assistance data exchange or even after sidelink positioning measurements, resulting in unnecessary signaling and/or poor positioning performance.

In accordance with some example embodiments of the present disclosure, there is proposed an improved solution for proximity-aware anchor selection in sidelink positioning. In this solution, a first apparatus, e.g., an anchor device or a target device, monitors proximity with respect to one or more second apparatuses, and indicates a proximity event to the one or more second apparatuses or other apparatus(es) (e.g., the target device, LMF, or server device). The recipient of the proximity event detection indication can perform an action related to anchor devices in the sidelink positioning session, such as (candidate) anchor device discovery and/or selection. Through this solution, a device participating in the sidelink positioning session can proactively monitor proximity with respect to other devices, which can help in anchor selection for the sidelink positioning session. It is thus possible to minimize the GDOP, e.g., by timely updating the anchor devices selected for positioning the target device and ensuring that the selected anchor devices are not in a line.

In some example embodiments, the proposed solution is particularly relevant in cases where the absolute locations of the anchor devices in a sidelink positioning session may not be available to the positioning server, e.g., during anchor device discovery, or when the available absolute location information is outdated.

Example embodiments of the present disclosure will be described in detail below with reference to the accompanying drawings.

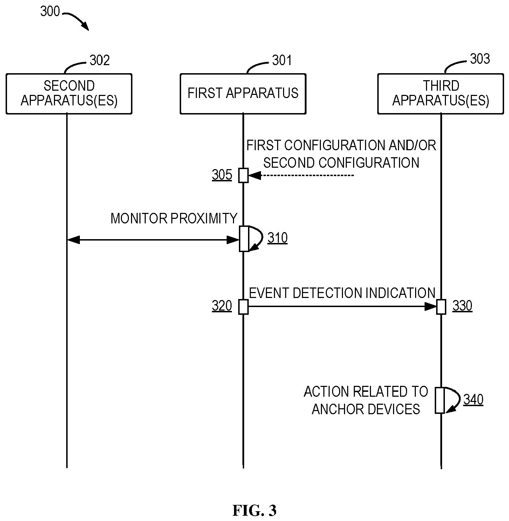

FIG. 3 illustrates a flowchart of a signaling flow 300 for sidelink positioning in accordance with some example embodiments of the present disclosure. Without loss of generality, the signaling flow 300 involves a first apparatus 301, one or more second apparatuses 302, and one or more third apparatuses 303.

In the signaling flow 300, the first apparatus 301 monitors (310) proximity of the first apparatus 301 with respect to at least one apparatus (e.g., one or more second apparatuses 302) during a sidelink positioning session. In some example embodiments, the first apparatus 301 may be a device involved in the sidelink positioning session. In some example embodiments, the first apparatus 301 may be an anchor device that is participating in the sidelink positioning session, e.g., an anchor device 120-1 or 120-2 in FIG. 1 or the anchor device 212-1 or 212-2 in FIG. 2A. In some example embodiments, the first apparatus 301 may be a target device to be positioned in the sidelink positioning session, e.g., the target device 110 in FIG. 1 or the target device 220 in FIG. 2A. In some other example embodiments, the first apparatus 301 may be any other device that is not participating in the sidelink positioning session but has the capability to monitor proximity of one or more other apparatuses for the sidelink positioning. In some example embodiments, more than one apparatus may be configured as the first apparatus 301, to monitor proximity with respect to other apparatus for a sidelink positioning session.

In some example embodiments, the "proximity" may be a measurement metric of spatial separation between the first apparatus 301 and a second apparatus 302, such as a distance, an angle, a strength of a signal, or may be a communication channel condition between the first apparatus 301 and a second apparatus 302. In some example embodiments, the "monitoring" by the first apparatus 301 is spatial ranging or angular separation evaluation, e.g., based on a signal strength (e.g., a signal strength of SL PRS or discovery messages).

In some example embodiments, the one or more second apparatuses 302 to be monitored by the first apparatus 301 may comprise at least one anchor device that is participating in the sidelink positioning session, at least one candidate anchor device discovered for the sidelink positioning session, and/or at least one anchor device that is not discovered for the sidelink positioning session.

In some example embodiments, the first apparatus 301 may be preconfigured with one or more second apparatuses to be monitored. For example, anchor devices in a sidelink positioning session are (pre-)configured to monitor other anchor devices in the same session.

In some example embodiments, the first apparatus 301 may receive (305) a first configuration for the monitoring of the at least one second apparatus 302. The first configuration may indicate at least one second apparatus 302 to be monitored by the first apparatus 301. In some example embodiments, alternatively or in addition, the first configuration may further indicate an identifier of the sidelink positioning session.

In some example embodiments, in the first configuration, the first apparatus 301 may be configured with a time duration for the monitoring and/or an area within which the monitoring is to be performed. In an embodiment, the proximity monitoring may be associated with a certain time duration, area, or cell information (e.g., a serving cell of an anchor device that will monitor).

In some example embodiments, the at least one second apparatus 302 to be monitored may include at least one apparatus indicated in the first configuration received by the first apparatus 301. In some example embodiments, alternatively or in addition, the at least one second apparatus 302 to be monitored may include at least one apparatus participating in the sidelink positioning session. For example, anchor devices in a sidelink positioning session are configured to monitor other anchor devices in the session.

In some example embodiments, alternatively or in addition, the at least one second apparatus 302 to be monitored may include at least one apparatus which transmits a discovery response to respond to a discovery solicitation message from a target device to be positioned in the sidelink positioning session. For example, the first apparatus 301 may monitor other apparatuses in the vicinity for which the sidelink measurement, e.g., the reference signal received power (RSRP) of discovery message or RSRP of SL PRS, is above a certain threshold.

In some example embodiments, alternatively or in addition, the at least one second apparatus 302 to be monitored may include at least one apparatus with a predetermined capability. The predetermined capability may include, but is not limited to, a supported SL positioning method(s), a bandwidth of SL PRS, and/or the like. In some example embodiments, information about capability of the apparatuses may be obtained from anchor device discovery and/or via sidelink positioning protocol ((S)LPP) messages, or via assistance information provided from the positioning server, e.g., via (S)LPP messages and/or downlink (DL) radio resource control (RRC) signaling or SL RRC signaling.

In some example embodiments, alternatively or in addition, the at least one second apparatus 302 to be monitored may include at least one apparatus in coverage of a cell or out-of-coverage of a cell, and/or at least one apparatus served by a public land mobile network (PLMN). In some example embodiments, alternatively or in addition, the at least one second apparatus 302 to be monitored may include at least one apparatus in vicinity of the first apparatus 301 for which a strength of a signal (e.g., RSRP of the discovery message or the RSRP of SL PRS) communicated between the first apparatus 301 and apparatuses located therein is above a strength threshold.

In some example embodiments, the first apparatus 301 may monitor the proximity of the first apparatus 301 with respect to the at least one second apparatus 302 in accordance with a determination that a monitoring request is received or a discovery solicitation message is received. For example, a target device may explicitly request an anchor device, which participates in its SL positioning session, to monitor one or more other anchor devices which is currently participating or not participating in the SL positioning session.

In some example embodiments, the first apparatus 301 may also receive (305) a second configuration indicating at least one of the following: at least one event detection condition for the monitoring of the at least one second apparatus 302, at least one measurement metric for use in the at least one event detection condition, wherein a measurement metric comprises a distance, an angle, a strength of a signal (e.g., RSRP), or a communication channel condition, or at least one event type to be monitored. The communication channel condition may include either one of a line-of-sight (LOS) condition, a non-line-of-sight (NLOS) condition, or an obstructed line-of-sight (OLOS) condition. In some example embodiments, the event detection conditions may further include whether the first apparatus 301 and a second apparatus 302 have a LOS, NLOS, or OLOS condition with respect to each other, or with respect to the target device over the sidelink.

In some example embodiments, the first configuration and/or the second configuration may be determined and provided to the first apparatus 301 by the target device or the positioning server. In some example embodiments, the first configuration and/or the second configuration may be indicated explicitly via (S)LPP, DL/SL RRC, or system information block (SIB) signaling. Alternatively, the first configuration and/or the second configuration (the apparatus(es) to be monitored, and/or the event detection conditions) may be pre-configured by the standard and/or by UE implementation.

An event type to be monitored may be associated with the measurement metric, and may correspond to one or more event detection conditions, respectively. For example, possible event types to be monitored may include an event(s) of two apparatuses being far from to each other (e.g., a distance exceeding a first distance threshold, an angle exceeding a first angle threshold, and/or a strength of a signal being lower than a second strength threshold), an event(s) of two apparatuses coming close to each other (e.g., a distance being lower than a second distance threshold, an angle being lower than a second angle threshold, and/or a strength of a signal exceeding a first strength threshold), an event(s) of two apparatuses being within a certain range of each other (e.g., a distance being above the second distance threshold and being below the first distance threshold, an angle being above the second angle threshold and being below the first angle threshold, and/or a strength of a signal being above the second strength threshold and being below the first strength threshold).

In some example embodiments, the event detection condition(s) configured for the first apparatus 301 may comprise at least one of detection of specific measurement values (e.g., RSRP, range) satisfying a pre-defined value range (e.g., above or below a threshold) or usage of specific identifiers (e.g., a same session ID).

The event detection condition(s) for the proximity monitoring may thus be defined based on the comparison between the distance, the angle, and/or the strength of the signal with the corresponding thresholds, or the communication channel condition.

In some example embodiments, the event detection condition for the proximity of the first apparatus 301 with respect to the second apparatus 302 is satisfied based on at least one of: a detection of a distance between the first apparatus 301 and the second apparatus 302 exceeding the first distance threshold, a detection of a distance between the first apparatus 301 and the second apparatus 302 being below the second distance threshold, a detection of an angle between the first apparatus 301 and the second apparatus 302 exceeding the first angle threshold, a detection of an angle between the first apparatus 301 and the second apparatus 302 being below the second angle threshold, a detection of a strength of a signal communicated between the first apparatus 301 and the second apparatus 302 exceeding the first strength threshold, a detection of a strength of a signal communicated between the first apparatus 301 and the second apparatus 302 being below the second strength threshold, or a detection of a communication channel condition between the first apparatus 301 and the second apparatus 302 being the LOS condition, the NLOS condition, or the OLOS condition.

For example, in the example scenario of FIG. 2B, as the anchor device 212-2 moves and gets very close to the anchor device 212-1, the RSRP of a reference signal between the anchor devices 212-1 and 212-2 may be measured as *R*₁₂, the RSRP of a reference signal between the anchor device 212-1 and the target device 220 is measured as *R_{1T}*, the RSRP of a reference signal between the anchor device 212-2 and the target device 220 is measured as *R_{2T}*. Similarly, the range or distance of the anchor device 212-1 and the anchor device 212-2 may be measured as *d*₁₂, the range or distance of the anchor device 212-1 and the target device 220 is measured as *d_{1T}*, the range or distance of the anchor device 212-2 and the target device 220 is measured as *d*₂*_{T}.*

In an embodiment, the event that "the anchor device 212-1 and the anchor device 212-2 are close to each other" can be detected if the range or distance *d*₁₂ of the anchor device 212-1 and the anchor device 212-2 becomes smaller than a (pre-)configured second distance threshold. In a further embodiment, the event that "the anchor device 212-1 and the anchor device 212-2 come close to each other" can be detected if the RSRP *R*₁₂ of a reference signal transmitted from the anchor device 212-1 to the anchor device 212-2 or from the anchor device 212-2 to the anchor device 212-1 is larger than a (pre-)configured first strength threshold.

In a further embodiment, similarly, the event that "the anchor device 212-1 and the anchor device 212-2 are far from each other" may be detected if the range/distance *d*₁₂ of the anchor device 212-1 and the anchor device 212-2 becomes larger than a first (pre-)configured threshold or if the RSRP *R*₁₂ of a reference signal transmitted from the anchor device 212-1 to the anchor device 212-2 or from the anchor device 212-2 to the anchor device 212-1 is lower than a (pre-)configured second strength threshold.

In a further embodiment, the event that "the anchor device 212-2 is within a specific range from anchor device 212-1" may be detected if the range/distance *d*₁₂ of the anchor device 212-1 and the anchor device 212-2 becomes higher than the (pre-)configured second distance threshold and lower than the (pre-)configured first distance threshold.

In some example embodiments, at least one of the first distance threshold, the second distance threshold, the first angle threshold, the second angle threshold, the first strength threshold, or the second strength threshold may be determined as a function of a distance between the first apparatus 301 and a target device to be positioned in the sidelink positioning session, and/or a distance between the second apparatus 302 and the target device, an angle between the first apparatus 301 and the target device, an angle between the second apparatus 302 and the target device, a strength of a signal communicated between the first apparatus 301 and the target device, a strength of a signal communicated between the second apparatus 302 and the target device. In an embodiment, one or more of the (pre-)configured thresholds in the above embodiments may be defined as a function of *d_{1T}*/*R_{1T}* and/or *d_{2T}*/*R*₂*_{T},* where *d_{iT}* is the distance between an anchor device *i* and the target device and *R_{iT}* is the RSRP of a reference signal transmitted from an anchor device *i* to the target device or from the target device to the anchor device *i*.

In some example embodiments, at least one of the first distance threshold, the second distance threshold, the first angle threshold, the second angle threshold, the first strength threshold, or the second strength threshold may be determined as a function of at least one of the following: a relative distance between the first apparatus 301 and the second apparatus 302 with respect to a distance between the first apparatus 301 or the second apparatus 302 and a target device to be positioned in the sidelink positioning session, or a relative signal strength of a signal communicated between the first apparatus 301 and the second apparatus 302 with respect to a strength of a signal communicated between the first apparatus 301 or the second apparatus 302 and the target device. In an embodiment, one or more of the (pre-)configured thresholds in the above embodiments may be defined as a function of *d*₁₂/*d*₁*_{T},* that is the relative distance of the second apparatus 302 to the first apparatus 301 with respect to the distance of the first apparatus 301 (or the second apparatus 302) to the target device.

In some example embodiments, the first apparatus 301 may further receive, from the at least one second apparatus 302 to be monitored, at least one of distance information or angle information of the at least one second apparatus 302. The first apparatus 301 may monitor, based on the at least one of the distance information or the angle information, proximity of the first apparatus 301 with respect to the at least one second apparatus 302. In some example embodiments, for the determination of proximity, the actual location or angle information of the anchor devices may be shared or indicated to one or more anchor devices.

If the first apparatus 301 302 detects that its proximity with respect to a second apparatus 302 satisfies an event detection condition, the first apparatus 301 transmits (320) an event detection indication to at least one third apparatus 303. A third apparatus 303 may be an apparatus which performs an action related to anchor devices for use in the sidelink positioning session. For example, the third apparatus 303 may be an apparatus which performs or triggers an action related to (candidate) anchor device discovery and/or selection for the sidelink positioning session.

In some example embodiments, the first apparatus 301 302 may transmit the event detection indication to a target device (e.g., the target device 110 in FIG. 1 or the target device 220 in FIG. 2A, FIG. 2B) to be positioned in the sidelink positioning session. In some example embodiments, the first apparatus 301 302 may transmit the event detection indication to a positioning server for the sidelink positioning session, e.g., the positioning server 130 in FIG. 1. In some example embodiments, the first apparatus 301 302 may transmit the event detection indication to the second apparatus 302 with respect to which the proximity event is detected.

Upon reception (330) of the event detection indication from the first apparatus 301, the at least one third apparatus 303 performs (340), based on the event detection indication, an action related to anchor devices for use in the sidelink positioning session.

In some example embodiments, the event detection indication may comprise an identity of the first apparatus 301 and/or an identity of the detected second apparatus 302. In some example embodiments, alternatively or in addition, the event detection indication may comprise an event type corresponding to the event detection condition, e.g., to indicate whether the second apparatus 302 is close to the first apparatus 301, is far from the first apparatus 301, or is within a certain range of the first apparatus 301, and/or has a certain angle range with the first apparatus 301. In some example embodiments, alternatively or in addition, the event detection indication may comprise at least one measurement metric that is used to trigger the event detection indication, where the at least one measurement metric may comprise at least one of a distance, an angle, a strength of a signal, or a communication channel condition between the first apparatus 301 and the second apparatus 302. In some example embodiments, alternatively or in addition, the event detection indication may comprise an identifier of the sidelink positioning session, e.g., a session ID.

In some example embodiments, the event detection indication may be transmitted to the second apparatus 302 with respect to which the proximity event is detected if this second apparatus 302 is a member of the same sidelink positioning session as the first apparatus 301.

The at least one third apparatus 303 receiving the event detection indication may perform responding actions. In some example embodiments, a third apparatus 303, which receives that the event detection indication from the first apparatus 301, may update a set of anchor devices participating in the sidelink positioning session. For example, the set of anchor devices used for positioning the target device is updated, e.g., by the positioning server or the target device. In some example embodiments, the positioning server (or the target device) may determine or update the set of anchor devices participating in the sidelink positioning session. For example, if the positioning server (or the target device) receives an event detection indication that the second apparatus 302 is close to the first apparatus 301, it may remove the second apparatus 302 (or the first apparatus 301) from the sidelink positioning session, and/or determine that another anchor device may be added to the sidelink positioning session to preserve the quality of service (QoS) associated with the sidelink positioning session.

In some example embodiments, alternatively or in addition, a third apparatus 303, which receives that the event detection indication from the first apparatus 301, may determine or update a configuration of SL PRS transmission of at least one of the first apparatus 301 or the second apparatus 302 participating in the sidelink positioning session. For example, if the first apparatus 301 and/or the second apparatus 302 are anchor devices in the sidelink positioning session for transmitting SL PRSs, the SL PRS transmission by the first apparatus 301 and/or the second apparatus 302 may be interrupted or may be temporarily interrupted, e.g., as long as the proximity event lasts. For example, if the positioning server (or the target device) receives an indication that the second apparatus 302 is close to the first apparatus 301, it may determine that wideband transmissions from both these two apparatuses are not necessary and may decide to reduce the bandwidth of the SL PRS transmission from the second apparatus 302 (or from the first apparatus 301).

In some example embodiments, alternatively or in addition, the third apparatus 303 may update a configuration of a measurement report related to a sidelink positioning reference signal transmitted from at least one of the first apparatus 301 or the second apparatus 302. For example, the positioning server (or the target device) may suspend or initiate the usage of measurement reports involving the device(s) indicated in the event detection indication. For example, if the positioning server (or the target device) receives an event detection indication that the second apparatus 302 is close to the first apparatus 301, it may suspend the usage of measurement reports involving the second apparatus 302 (or the first apparatus 301). The measurement reports may be collected by other devices (e.g., the target device) which detects SL PRS transmitted by the second apparatus 302 (or the first apparatus 301)

In some example embodiments, if the second apparatus 302 receives the event detection indication from the first apparatus 301, it may modify its discovery behavior. For example, the second apparatus 302 may not respond to Model B discovery messages from the target device with nearby anchor devices, or may stop transmission of Model A discovery message. In some example embodiments, the second apparatus 302 may suspend, initiate, or update its SL PRS transmission or measurement. For example, if the second apparatus 302 receives an event detection indication that it is close to the first apparatus 301, it may suspend its SL PRS transmission. In a further example, the second apparatus 302 may suspend its SL PRS transmission for a (pre-)configured time interval.

It would be appreciated that some example actions performed by the at least one third apparatus 303 are described above as a response to the event detection indication, and any other actions related to anchor devices and/or other aspects in the sidelink positioning may be determined. In some example embodiments, the action(s) performed by the at least one third apparatus 303 may be determined based on additional information in addition to the received event detection indication.

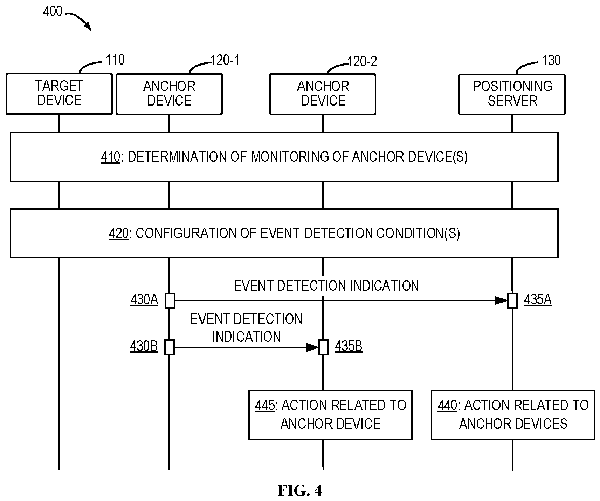

FIG. 4 illustrates a flowchart of a signaling flow 400 for sidelink positioning in accordance with some further example embodiments of the present disclosure. The signaling flow 400 involves a group of devices as shown in FIG. 1, including the target device 110, a plurality of anchor devices 120-1, 120-2, and the positioning server 130. As mentioned above, although two anchor devices are illustrated, there may be more than two anchor devices in some other embodiments. The signaling flow 400 of FIG. 4 may be considered as an example embodiment of the signaling flow 300 of FIG. 3.

At step 410, one or more devices involved in the signaling flow 400 are pre-configured or configured to determine anchor device(es) they should monitor. The one or more devices (pre-)configured for the monitoring may include any of the anchor devices 120, or the target device 110.

In some example embodiments, anchor devices 120-1, 120-2, and possible other anchor devices in a sidelink positioning session may be preconfigured or configured (by receiving a configuration) to monitor other anchor devices in the sidelink positioning session.

In some example embodiments, a configuration to monitoring of other anchor devices may include a configuration on the ranging parameters (e.g., relative distance and angle with respect to absolute north or boresight of anchor device) that determine the relative position of other anchor devices with respect to the anchor device that performs the monitoring.

In some example embodiments, an anchor device(s) 120 that has received a model B discovery solicitation message (from the target device 110) may monitor the discovery responses of other anchor devices, to monitor the proximity.

In some example embodiments, an anchor device(s) 120 to be monitored may include anchor device(s) that supports certain UE capabilities, e.g., supported sidelink positioning methods, SL PRS bandwidth, etc. Such information may be obtained from anchor devices discovery and/or via (S)LPP messages, or via assistance information provided from positioning server, e.g., via (S)LPP and/or DL/SL RRC.

In some example embodiments, an anchor device(s) 120 to be monitored may include anchor device(s) that are in coverage or out-of-coverage, and served by a certain cell and PLMN.

In some example embodiments, the target device 110 may explicitly request an anchor device, e.g., the anchor device 120-1, which participates in its sidelink positioning session, to monitor the anchor device 120-2, which is currently not participating in the session.

In some example embodiments, the proximity monitoring may be associated with a certain time duration, area, or cell information (e.g., serving cell of anchor device that will monitor).

In some example embodiments, an anchor device 120 may be configured to monitor anchor devices in the vicinity for which the sidelink measurement, e.g., RSRP of discovery message or RSRP of SL PRS, is above a certain threshold.

At step 420, the one or more devices involved in the signaling flow 400 are pre-configured or configured to determine what events they should monitor. The (pre-)configuration may include the definition of event detection conditions.

In some example embodiments, the (pre-)configuration for the event detection (i.e., which devices to monitor and associated the event detection conditions) may be determined and provided to anchor devices 120 by the target device 110 or the positioning server 130, which can be indicated explicitly via (S)LPP, DL/SL RRC, or system information block (SIB) signaling. Alternatively, the event detection conditions may be pre-configured by the standard and/or by UE implementation.

In some example embodiments, the following event detection conditions may be defined.

In an embodiment, the event that "the anchor device 120-1 and the anchor device 120-2 are close to each other" can be detected if the range/distance *d*₁₂ of the anchor device 120-1 and the anchor device 120-2 becomes smaller than a (pre-)configured distance threshold. In a further embodiment, the event that "the anchor device 120-1 and the anchor device 120-2 come close to each other" can be detected if the RSRP *R*₁₂ of a reference signal transmitted from the anchor device 120-1 to the anchor device 120-2 or from the anchor device 120-2 to the anchor device 120-1 is larger than a (pre-)configured strength threshold.

In a further embodiment, similarly, the event that "the anchor device 120-1 and the anchor device 120-2 are far from each other" can be detected if the range/distance *d*₁₂ of the anchor device 120-1 and the anchor device 120-2 becomes larger than a (pre-)configured threshold or if the RSRP *R*₁₂ of a reference signal transmitted from the anchor device 120-1 to the anchor device 120-2 or from the anchor device 120-2 to the anchor device 120-1 is lower than a (pre-)configured strength threshold.

In a further embodiment, the above two embodiments may be combined to detect the event that "the anchor device 120-2 is within a specific range from anchor device 120-1."

In an embodiment, the (pre-)configured thresholds in the above embodiments may be defined as a function of *d*₁₂/*d_{1T}*and/or *d_{2T}*/*R_{2T}*, where *d_{iT}* is the distance between an anchor device *i* and the target device and *R_{iT}* is the RSRP of a reference signal transmitted from an anchor device *i* to the target device or from the target device to the anchor device *i*.

In an embodiment, the (pre-)configured thresholds in the above embodiments may be defined as a function of *d*₁₂/*d*₁*_{T},* that is the relative distance of the anchor device 120-2 to the anchor device 120-1 with respect to the distance of the anchor device 120-1 (or the anchor device 120-2) to the target device 110.

In some example embodiments, the event detection conditions may further include whether the anchor device 120-1 and the anchor device 120-2 have a LOS, NLOS, or OLOS condition with respect to each other, or with respect to the target device over the sidelink.

In some example embodiments, for the determination of proximity, the actual location or angle information of the anchor devices may be shared or indicated to one or more anchor devices.

After the event detection, one or more devices may indicate the detected event to other devices. In the example of FIG. 4, it is assumed that the anchor device 120-1 is configured to monitor proximity of other anchor devices including the anchor device 120-2. After the event detection, the anchor device 120-1 indicates the detected event to the positioning server 130 and/or the anchor device 120-2 by transmitting (at 430A and/or 430B) an event detection indication. In some example embodiments, alternatively or in addition, the anchor device 120-1 may indicate the detected event to the target device 110.

In some example embodiments, the event detection indication may include the event that has been detected.

In some example embodiments, alternatively or in addition, the event detection indication may include the involved anchor device(es) in the detected event. For example, the anchor device 120-1 may indicate that the anchor device 120-2 is close to it.

In some example embodiments, alternatively or in addition, the event detection indication may include the involved measurement metrices or quantities in the detected event. For example, the anchor device 120-1 may report *R*₁₂ or LOS with respect to the anchor device 120-2.

In some example embodiments, the event detection indication may be provided in the discovery response in Model B discovery or in the discovery message in Model A discovery.

The entity receiving the event detection indication executes response measures. In some example embodiments, upon reception (43 5A) of the event detection indication, the positioning server 130 may perform (440) an action related to anchor devices in the sidelink positioning session. Upon reception (43 5B) of the event detection indication, the anchor device 120-2 may perform (445) an action related to itself.

In some example embodiments, the positioning server 130 (or the target device 110) may determine or update the set of anchor devices participating in the sidelink positioning session. For example, if the positioning server 130 (or the target device 110) receives an event detection indication that the anchor device 120-2 is close to the anchor device 120-1, it may remove the anchor device 120-2 (or the anchor device 120-1) from the sidelink positioning session, and/or determine that another anchor device may be added to the sidelink positioning session to preserve the quality of service (QoS) associated with the sidelink positioning session.

In some example embodiments, alternatively or in addition, the positioning server 130 (or the target device 110) may determine or update the SL PRS configurations of the anchor devices participating in the sidelink positioning session. For example, if the positioning server 130 (or the target device 110) receives an indication that the anchor device 120-2 is close to the anchor device 120-1, it may determine that wideband transmissions from both these two devices are not necessary and may decide to reduce the bandwidth of the SL PRS transmission from the anchor device 120-2.

In some example embodiments, alternatively or in addition, the positioning server 130 (or the target device 110) may suspend or initiate the usage of measurement reports involving the device(s) indicated in the event detection indication. For example, if the positioning server 130 (or the target device 110) receives an event detection indication that the anchor device 120-2 is close to the anchor device 120-1, it may suspend the usage of measurement reports involving the anchor device 120-2 (or the anchor device 120-1).

In some example embodiments, the anchor device 120-2 may suspend, initiate, or update its SL PRS transmission or measurement. For example, if the anchor device 120-2 receives an event detection indication that it is close to the anchor device 120-1, it may suspend its SL PRS transmission. In a further example, the anchor device 120-2 may suspend its SL PRS transmission for a (pre-)configured time interval. In some example embodiments, the anchor device 120-2 may not respond to Model B discovery messages from the target device 110 with nearby anchor devices, or may stop transmission of Model A discovery message.

It would be appreciated that some example actions performed by the positioning server 130, the target device 110, and/or the anchor device 120-2 are described above as a response to the event detection indication, and any other actions related to anchor devices and/or other aspects in the sidelink positioning may be determined. In some example embodiments, the action(s) performed by the positioning server 130, the target device 110, and/or the anchor device 120-2 may be determined based on additional information in addition to the received event detection indication.

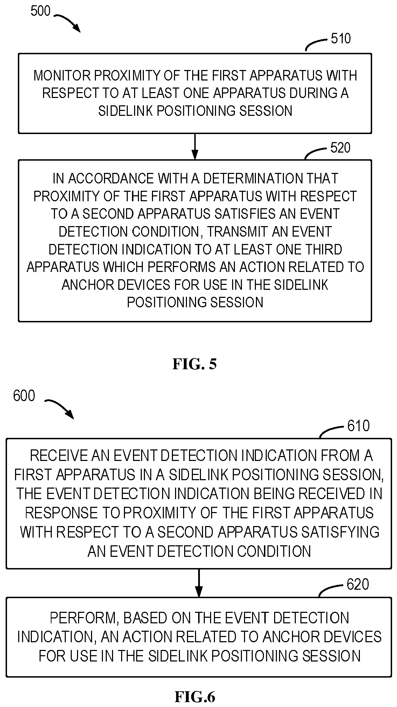

FIG. 5 shows a flowchart of an example method 500 implemented at a first apparatus in accordance with some example embodiments of the present disclosure. For the purpose of discussion, the method 500 will be described from the perspective of the first apparatus 301 in FIG. 3.

At block 510, the first apparatus 301 monitors proximity of the first apparatus with respect to at least one apparatus during a sidelink positioning session.

At block 520, in accordance with a determination that proximity of the first apparatus with respect to a second apparatus satisfies an event detection condition, the first apparatus 301 transmits an event detection indication to at least one third apparatus which performs an action related to anchor devices for use in the sidelink positioning session.

In some example embodiments, the first apparatus 301 receives a first configuration for the monitoring of the at least one apparatus, wherein the first configuration indicates at least one of the following: the at least one apparatus to be monitored, or an identifier of the sidelink positioning session, a time duration for the monitoring, an area within which the monitoring is to be performed.

In some example embodiments, the at least one apparatus to be monitored comprises: at least one apparatus participating in the sidelink positioning session, at least one apparatus indicated in a received first configuration, at least one apparatus which transmits a discovery response to respond to a discovery solicitation message from a target device to be positioned in the sidelink positioning session, at least one apparatus with a predetermined capability, at least one apparatus in coverage of a cell or out-of-coverage of a cell, at least one apparatus served by a public land mobile network, or at least one apparatus in vicinity of the first apparatus for which a strength of a signal communicated between the first apparatus and apparatuses located therein is above a strength threshold.

In some example embodiments, the first apparatus 301 may monitor the proximity of the first apparatus with respect to the at least one apparatus in accordance with a determination that a monitoring request is received or a discovery solicitation message is received.

In some example embodiments, the first apparatus 301 receives a second configuration indicating at least one of the following: at least one event detection condition for the monitoring of the at least one apparatus, at least one measurement metric for use in the at least one event detection condition, wherein a measurement metric comprises a distance, an angle, a strength of a signal, or a communication channel condition, or at least one event type to be monitored, the at least one event type being corresponding to the at least one event detection condition, respectively.

In some example embodiments, the event detection condition for the proximity of the first apparatus with respect to the second apparatus is satisfied based on at least one of: a detection of a distance between the first apparatus and the second apparatus exceeding a first distance threshold, a detection of a distance between the first apparatus and the second apparatus being below a second distance threshold, a detection of an angle between the first apparatus and the second apparatus exceeding a first angle threshold, a detection of an angle between the first apparatus and the second apparatus being below a second angle threshold, a detection of a strength of a signal communicated between the first apparatus and the second apparatus exceeding a first strength threshold, a detection of a strength of a signal communicated between the first apparatus and the second apparatus being below a second strength threshold, or a detection of a communication channel condition between the first apparatus and the second apparatus being a line-of-sight condition, a non-line-of-sight condition, or an obstructed line-of-sight condition.

In some example embodiments, at least one of the first distance threshold, the second distance threshold, the first angle threshold, the second angle threshold, the first strength threshold, or the second strength threshold is determined as a function of at least one of the following: a distance between the first apparatus and a target device to be positioned in the sidelink positioning session, a distance between the second apparatus and the target device, an angle between the first apparatus and the target device, an angle between the second apparatus and the target device, a strength of a signal communicated between the first apparatus and the target device, a strength of a signal communicated between the second apparatus and the target device.

In some example embodiments, at least one of the first distance threshold, the second distance threshold, the first angle threshold, the second angle threshold, the first strength threshold, or the second strength threshold is determined as a function of at least one of the following: a relative distance between the first apparatus and the second apparatus with respect to a distance between the first apparatus or the second apparatus and a target device to be positioned in the sidelink positioning session, or a relative signal strength of a signal communicated between the first apparatus and the second apparatus with respect to a strength of a signal communicated between the first apparatus or the second apparatus and the target device.

In some example embodiments, the first apparatus 301 may further receive, from the at least one apparatus, at least one of distance information or angle information of the at least one apparatus; and monitor, based on the at least one of the distance information or the angle information, proximity of the first apparatus with respect to the at least one apparatus.

In some example embodiments, the at least one apparatus to be monitored by the first apparatus comprises at least one of the following: at least one anchor device participating in the sidelink positioning session, at least one candidate anchor device discovered for the sidelink positioning session, or at least one anchor device that is not discovered for the sidelink positioning session.

In some example embodiments, the event detection indication comprises at least one of the following: an identity of the first apparatus, an identity of the second apparatus, an event type corresponding to the event detection condition, at least one measurement metric for use in the event detection condition, wherein the at least one measurement metric comprises at least one of a distance, an angle, a strength of a signal, or a communication channel condition between the first apparatus and the second apparatus, or an identifier of the sidelink positioning session.

In some example embodiments, the first apparatus comprises an anchor device in the sidelink positioning session or a target device to be positioned in the sidelink positioning session; and/or wherein the at least one third apparatus comprises at least one of the following: the target device to be positioned in the sidelink positioning session, a positioning server for the sidelink positioning session, or the second apparatus.

In some example embodiments, the first apparatus 301 may transmit, to the at least one third apparatus, the event detection indication in a discovery response or in a discovery message.

FIG. 6 shows a flowchart of an example method 600 implemented at a third apparatus in accordance with some example embodiments of the present disclosure. For the purpose of discussion, the method 600 will be described from the perspective of the third apparatus 303 in FIG. 3.

At block 610, the third apparatus 303 receives an event detection indication from a first apparatus in a sidelink positioning session, the event detection indication being received in response to proximity of the first apparatus with respect to a second apparatus satisfying an event detection condition.

At block 620, the third apparatus 303 performs, based on the event detection indication, an action related to anchor devices for use in the sidelink positioning session.

In some example embodiments, the third apparatus 303 may update a set of anchor devices participating in the sidelink positioning session, update a configuration of sidelink positioning reference signal transmission of at least one of the first apparatus or the second apparatus, or update a configuration of a measurement report related to a sidelink positioning reference signal transmitted from at least one of the first apparatus or the second apparatus.

In some example embodiments, the event detection indication comprises at least one of the following: an identity of the first apparatus, an identity of the second apparatus, an event type corresponding to the event detection condition, at least one measurement metric for use in the event detection condition, wherein the at least one measurement metric comprises at least one of a distance, an angle, a strength of a signal, or a communication channel condition between the first apparatus and the second apparatus, or an identifier of the sidelink positioning session.

In some example embodiments, the first apparatus comprises an anchor device in the sidelink positioning session or a target device to be positioned in the sidelink positioning session; and/or wherein the second apparatus comprises: an anchor device participating in the sidelink positioning session, a candidate anchor device discovered for the sidelink positioning session, or an anchor device that is not discovered for the sidelink positioning session; and/or wherein the third apparatus comprises the target device to be positioned in the sidelink positioning session, a positioning server for the sidelink positioning session, or the second apparatus.

In some example embodiments, a first apparatus capable of performing any of the method 500 (for example, the first apparatus 301 in FIG. 3 may comprise means for performing the respective operations of the method 500. The means may be implemented in any suitable form. For example, the means may be implemented in a circuitry or software module. The first apparatus may be implemented as or included in the first apparatus 301 in FIG. 3.

In some example embodiments, the first apparatus comprises means for monitoring proximity of the first apparatus with respect to at least one apparatus during a sidelink positioning session; and means for, in accordance with a determination that proximity of the first apparatus with respect to a second apparatus satisfies an event detection condition, transmitting an event detection indication to at least one third apparatus which performs an action related to anchor devices for use in the sidelink positioning session.

In some example embodiments, the first apparatus further comprises: means for receiving a first configuration for the monitoring of the at least one apparatus, wherein the first configuration indicates at least one of the following: the at least one apparatus to be monitored, or an identifier of the sidelink positioning session, a time duration for the monitoring, an area within which the monitoring is to be performed.

In some example embodiments, the at least one apparatus to be monitored comprises: at least one apparatus participating in the sidelink positioning session, at least one apparatus indicated in a received first configuration, at least one apparatus which transmits a discovery response to respond to a discovery solicitation message from a target device to be positioned in the sidelink positioning session, at least one apparatus with a predetermined capability, at least one apparatus in coverage of a cell or out-of-coverage of a cell, at least one apparatus served by a public land mobile network, or at least one apparatus in vicinity of the first apparatus for which a strength of a signal communicated between the first apparatus and apparatuses located therein is above a strength threshold.

In some example embodiments, the means for monitoring the proximity comprises: means for monitoring the proximity of the first apparatus with respect to the at least one apparatus in accordance with a determination that a monitoring request is received or a discovery solicitation message is received.

In some example embodiments, the first apparatus further comprises: means for receiving a second configuration indicating at least one of the following: at least one event detection condition for the monitoring of the at least one apparatus, at least one measurement metric for use in the at least one event detection condition, wherein a measurement metric comprises a distance, an angle, a strength of a signal, or a communication channel condition, or at least one event type to be monitored, the at least one event type being corresponding to the at least one event detection condition, respectively.

In some example embodiments, the event detection condition for the proximity of the first apparatus with respect to the second apparatus is satisfied based on at least one of: a detection of a distance between the first apparatus and the second apparatus exceeding a first distance threshold, a detection of a distance between the first apparatus and the second apparatus being below a second distance threshold, a detection of an angle between the first apparatus and the second apparatus exceeding a first angle threshold, a detection of an angle between the first apparatus and the second apparatus being below a second angle threshold, a detection of a strength of a signal communicated between the first apparatus and the second apparatus exceeding a first strength threshold, a detection of a strength of a signal communicated between the first apparatus and the second apparatus being below a second strength threshold, or a detection of a communication channel condition between the first apparatus and the second apparatus being a line-of-sight condition, a non-line-of-sight condition, or an obstructed line-of-sight condition.

In some example embodiments, at least one of the first distance threshold, the second distance threshold, the first angle threshold, the second angle threshold, the first strength threshold, or the second strength threshold is determined as a function of at least one of the following: a distance between the first apparatus and a target device to be positioned in the sidelink positioning session, a distance between the second apparatus and the target device, an angle between the first apparatus and the target device, an angle between the second apparatus and the target device, a strength of a signal communicated between the first apparatus and the target device, a strength of a signal communicated between the second apparatus and the target device.

In some example embodiments, at least one of the first distance threshold, the second distance threshold, the first angle threshold, the second angle threshold, the first strength threshold, or the second strength threshold is determined as a function of at least one of the following: a relative distance between the first apparatus and the second apparatus with respect to a distance between the first apparatus or the second apparatus and a target device to be positioned in the sidelink positioning session, or a relative signal strength of a signal communicated between the first apparatus and the second apparatus with respect to a strength of a signal communicated between the first apparatus or the second apparatus and the target device.

In some example embodiments, the means for monitoring proximity comprises: means for receiving, from the at least one apparatus, at least one of distance information or angle information of the at least one apparatus; and means for monitoring, based on the at least one of the distance information or the angle information, proximity of the first apparatus with respect to the at least one apparatus.

In some example embodiments, the at least one apparatus to be monitored by the first apparatus comprises at least one of the following: at least one anchor device participating in the sidelink positioning session, at least one candidate anchor device discovered for the sidelink positioning session, or at least one anchor device that is not discovered for the sidelink positioning session.

In some example embodiments, the event detection indication comprises at least one of the following: an identity of the first apparatus, an identity of the second apparatus, an event type corresponding to the event detection condition, at least one measurement metric for use in the event detection condition, wherein the at least one measurement metric comprises at least one of a distance, an angle, a strength of a signal, or a communication channel condition between the first apparatus and the second apparatus, or an identifier of the sidelink positioning session.

In some example embodiments, the first apparatus comprises an anchor device in the sidelink positioning session or a target device to be positioned in the sidelink positioning session; and/or wherein the at least one third apparatus comprises at least one of the following: the target device to be positioned in the sidelink positioning session, a positioning server for the sidelink positioning session, or the second apparatus.

In some example embodiments, the means for transmitting the event detection indication comprises: means for transmitting, to the at least one third apparatus, the event detection indication in a discovery response or in a discovery message.

In some example embodiments, the first apparatus further comprises means for performing other operations in some example embodiments of the method 500 or the first apparatus 301. In some example embodiments, the means comprises at least one processor; and at least one memory storing instructions that, when executed by the at least one processor, cause the performance of the first apparatus.

In some example embodiments, a third apparatus capable of performing any of the method 600 (for example, the third apparatus 303 in FIG. 3) may comprise means for performing the respective operations of the method 600. The means may be implemented in any suitable form. For example, the means may be implemented in a circuitry or software module. The third apparatus may be implemented as or included in the third apparatus 303 in FIG. 3.

In some example embodiments, the third apparatus comprises means for receiving an event detection indication from a first apparatus in a sidelink positioning session, the event detection indication being received in response to proximity of the first apparatus with respect to a second apparatus satisfying an event detection condition; and means for performing, based on the event detection indication, an action related to anchor devices for use in the sidelink positioning session.

In some example embodiments, the third apparatus further comprises: means for updating a set of anchor devices participating in the sidelink positioning session, means for updating a configuration of sidelink positioning reference signal transmission of at least one of the first apparatus or the second apparatus, or means for updating a configuration of a measurement report related to a sidelink positioning reference signal transmitted from at least one of the first apparatus or the second apparatus.

In some example embodiments, the event detection indication comprises at least one of the following: an identity of the first apparatus, an identity of the second apparatus, an event type corresponding to the event detection condition, at least one measurement metric for use in the event detection condition, wherein the at least one measurement metric comprises at least one of a distance, an angle, a strength of a signal, or a communication channel condition between the first apparatus and the second apparatus, or an identifier of the sidelink positioning session.

In some example embodiments, the first apparatus comprises an anchor device in the sidelink positioning session or a target device to be positioned in the sidelink positioning session; and/or wherein the second apparatus comprises: an anchor device participating in the sidelink positioning session, a candidate anchor device discovered for the sidelink positioning session, or an anchor device that is not discovered for the sidelink positioning session; and/or wherein the third apparatus comprises the target device to be positioned in the sidelink positioning session, a positioning server for the sidelink positioning session, or the second apparatus.

In some example embodiments, the third apparatus further comprises means for performing other operations in some example embodiments of the method 600 or the third apparatus 303. In some example embodiments, the means comprises at least one processor; and at least one memory storing instructions that, when executed by the at least one processor, cause the performance of the second apparatus.

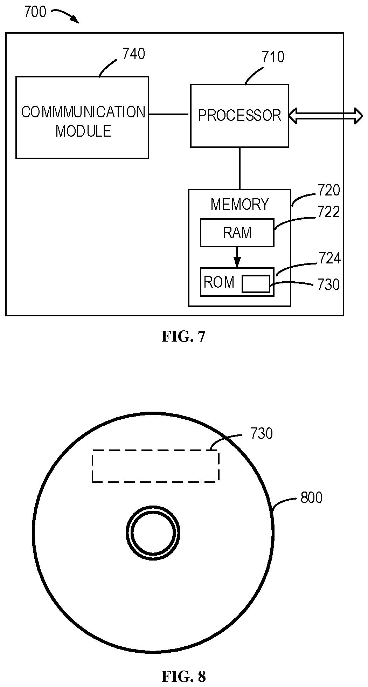

FIG. 7 is a simplified block diagram of a device 700 that is suitable for implementing example embodiments of the present disclosure. The device 700 may be provided to implement a communication device, for example, the first apparatus 301 or the third apparatus 303 as shown in FIG. 3. As shown, the device 700 includes one or more processors 710, one or more memories 720 coupled to the processor 710, and one or more communication modules 740 coupled to the processor 710.

The communication module 740 is for bidirectional communications. The communication module 740 has one or more communication interfaces to facilitate communication with one or more other modules or devices. The communication interfaces may represent any interface that is necessary for communication with other network elements. In some example embodiments, the communication module 740 may include at least one antenna.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The instructions of the program 730 may include instructions for performing operations/acts of some example embodiments of the present disclosure. The program 730 may be stored in the memory, e.g., the ROM 724. The processor 710 may perform any suitable actions and processing by loading the program 730 into the RAM 722.

The example embodiments of the present disclosure may be implemented by means of the program 730 so that the device 700 may perform any process of the disclosure as discussed with reference to FIG. 2 to FIG. 6. The example embodiments of the present disclosure may also be implemented by hardware or by a combination of software and hardware.

In some example embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 8 shows an example of the computer readable medium 800 which may be in form of CD, DVD or other optical storage disk. The computer readable medium 800 has the program 730 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

Some abbreviations used in the present disclosure are provided below with their representation in unshortened form. It is noted that widely established and unique abbreviations can be assumed as known.

### List of abbreviations

- A-UE: Anchor UE
- GDOP: Geometric Dilution of Precision
- LMF: Location Management Function
- LOS: Line of sight
- NLOS: Non line of sight
- OLOS: Obstructed line of sight
- PRS: Positioning Reference Signal
- QoS: Quality of Service
- RRC: Radio Resource Control
- RSRP: Reference Signal Received Power
- SIB: System Information Block
- SL: Sidelink
- SLPP: Sidelink Positioning Protocol
- S-UE: Server UE

## Claims

1. A first apparatus, comprising:
at least one processor; and
at least one memory storing instructions that, when executed by the at least one processor, cause the first apparatus at least to perform:
monitoring proximity of the first apparatus with respect to at least one apparatus during a sidelink positioning session; and
in accordance with a determination that proximity of the first apparatus with respect to a second apparatus satisfies an event detection condition, transmitting an event detection indication to at least one third apparatus which performs an action related to anchor devices for use in the sidelink positioning session.

2. The apparatus of claim 1, wherein the first apparatus is further caused to perform:
receiving a first configuration for the monitoring of the at least one apparatus, wherein the first configuration indicates at least one of the following:
the at least one apparatus to be monitored, or
an identifier of the sidelink positioning session,
a time duration for the monitoring,
an area within which the monitoring is to be performed.

3. The apparatus of claim 1 or claim 2, wherein the at least one apparatus to be monitored comprises:
at least one apparatus participating in the sidelink positioning session,
at least one apparatus indicated in a received first configuration,
at least one apparatus which transmits a discovery response to respond to a discovery solicitation message from a target device to be positioned in the sidelink positioning session,
at least one apparatus with a predetermined capability,
at least one apparatus in coverage of a cell or out-of-coverage of a cell,
at least one apparatus served by a public land mobile network, or
at least one apparatus in vicinity of the first apparatus for which a strength of a signal communicated between the first apparatus and apparatuses located therein is above a strength threshold.

4. The apparatus of any of claims 1 to 3, wherein the first apparatus is caused to perform:
monitoring the proximity of the first apparatus with respect to the at least one apparatus in accordance with a determination that a monitoring request is received or a discovery solicitation message is received.

5. The apparatus of any of claims 1 to 4, wherein the first apparatus is further caused to perform:
receiving a second configuration indicating at least one of the following:
at least one event detection condition for the monitoring of the at least one apparatus,
at least one measurement metric for use in the at least one event detection condition, wherein a measurement metric comprises a distance, an angle, a strength of a signal, or a communication channel condition, or
at least one event type to be monitored, the at least one event type being corresponding to the at least one event detection condition, respectively.

6. The apparatus of any of claims 1 to 5, wherein the event detection condition for the proximity of the first apparatus with respect to the second apparatus is satisfied based on at least one of:
a detection of a distance between the first apparatus and the second apparatus exceeding a first distance threshold,
a detection of a distance between the first apparatus and the second apparatus being below a second distance threshold,
a detection of an angle between the first apparatus and the second apparatus exceeding a first angle threshold,
a detection of an angle between the first apparatus and the second apparatus being below a second angle threshold,
a detection of a strength of a signal communicated between the first apparatus and the second apparatus exceeding a first strength threshold,
a detection of a strength of a signal communicated between the first apparatus and the second apparatus being below a second strength threshold, or
a detection of a communication channel condition between the first apparatus and the second apparatus being a line-of-sight condition, a non-line-of-sight condition, or an obstructed line-of-sight condition.

7. The apparatus of claim 6, wherein at least one of the first distance threshold, the second distance threshold, the first angle threshold, the second angle threshold, the first strength threshold, or the second strength threshold is determined as a function of at least one of the following:
a distance between the first apparatus and a target device to be positioned in the sidelink positioning session,
a distance between the second apparatus and the target device,
an angle between the first apparatus and the target device,
an angle between the second apparatus and the target device,
a strength of a signal communicated between the first apparatus and the target device,
a strength of a signal communicated between the second apparatus and the target device.

8. The apparatus of claim 6, wherein at least one of the first distance threshold, the second distance threshold, the first angle threshold, the second angle threshold, the first strength threshold, or the second strength threshold is determined as a function of at least one of the following:
a relative distance between the first apparatus and the second apparatus with respect to a distance between the first apparatus or the second apparatus and a target device to be positioned in the sidelink positioning session, or
a relative signal strength of a signal communicated between the first apparatus and the second apparatus with respect to a strength of a signal communicated between the first apparatus or the second apparatus and the target device.

9. The apparatus of any of claims 1 to 8, wherein the first apparatus is caused to perform:
receiving, from the at least one apparatus, at least one of distance information or angle information of the at least one apparatus; and
monitoring, based on the at least one of the distance information or the angle information, proximity of the first apparatus with respect to the at least one apparatus.

10. The apparatus of any of claims 1 to 9, wherein the at least one apparatus to be monitored by the first apparatus comprises at least one of the following:
at least one anchor device participating in the sidelink positioning session,
at least one candidate anchor device discovered for the sidelink positioning session, or
at least one anchor device that is not discovered for the sidelink positioning session.

11. The apparatus of any of claims 1 to 10, wherein the first apparatus is caused to perform:
transmitting, to the at least one third apparatus, the event detection indication in a discovery response or in a discovery message.

12. A third apparatus comprising:
at least one processor; and
at least one memory storing instructions that, when executed by the at least one processor, cause the third apparatus at least to perform:
receiving an event detection indication from a first apparatus in a sidelink positioning session, the event detection indication being received in response to proximity of the first apparatus with respect to a second apparatus satisfying an event detection condition; and
performing, based on the event detection indication, an action related to anchor devices for use in the sidelink positioning session.

13. The apparatus of claim 12, wherein the third apparatus is caused to perform at least one of the following actions:
updating a set of anchor devices participating in the sidelink positioning session,
updating a configuration of sidelink positioning reference signal transmission of at least one of the first apparatus or the second apparatus, or
updating a configuration of a measurement report related to a sidelink positioning reference signal transmitted from at least one of the first apparatus or the second apparatus.

14. The apparatus of any preceding claim, wherein the event detection indication comprises at least one of the following:
an identity of the first apparatus,
an identity of the second apparatus,
an event type corresponding to the event detection condition,
at least one measurement metric for use in the event detection condition, wherein the at least one measurement metric comprises at least one of a distance, an angle, a strength of a signal, or a communication channel condition between the first apparatus and the second apparatus, or
an identifier of the sidelink positioning session.

15. The apparatus of any preceding claim, wherein the first apparatus comprises an anchor device in the sidelink positioning session or a target device to be positioned in the sidelink positioning session; and/or
wherein the second apparatus comprises: an anchor device participating in the sidelink positioning session, a candidate anchor device discovered for the sidelink positioning session, or an anchor device that is not discovered for the sidelink positioning session; and/or
wherein the third apparatus comprises the target device to be positioned in the sidelink positioning session, a positioning server for the sidelink positioning session, or the second apparatus.
